# EUROPÄISCHE PATENTANMELDUNG

(11) **EP 4 604 343 A1**
(43) Veröffentlichungstag der Anmeldung: **20.08.2025**
(21) Anmeldenummer: 25157967.8
(22) Anmeldetag: 14.02.2025
(51) Int. Cl.: H02J 1/14, H02J 3/14, H02J 3/38

(54) **SCHALTUNGSVORRICHTUNG**

(30) Priorität: 14.02.2024 DE 102024104078
(71) Anmelder: Fothermo System AG, 89231 Neu-Ulm (DE)
(72) Erfinder: Masenko, Manuel, 89231 Neu-Ulm (DE); Adelmann, Peter, 89231 Neu-Ulm (DE)
(74) Vertreter: Baur & Weber Patentanwälte PartG mbB

(57) **Zusammenfassung**

Es wird eine Schaltungsvorrichtung (2) beschrieben, die eine Anpassungsschaltung (10) aufweist, die eine Impedanz eines Heizwiderstands eines Wasserboilers als resistive Last (16) anpasst, wobei die resistive Last (16) über einen Schalter (14) parallel zu einem Kondensator (12) und Ausgangsanschlüssen (6, 8) einer regenerativen Energiequelle (4) in Form einer Solarzelle verbunden ist, und eine parallel zu den Ausgangsanschlüssen (6, 8) der regenerativen Energiequelle (4) angeordnete weitere Lastschaltung (20) mit einem Wechselrichter (22) aufweist, der mit einem Stromnetz (24) verbunden ist, wobei die Aufteilung der Leistungsabgabe der regenerativen Energiequelle (4) an die resistive Last (16) und an die weitere Lastschaltung (20) so festgelegt ist, dass die von der weiteren Lastschaltung (20) an das Stromnetz (24) abgegebene Leistung einer Grundlast entspricht.

## Beschreibung

Die Erfindung betrifft eine Schaltungsvorrichtung.

Im Zuge der Umstellung auf regenerative Energiequellen werden großflächige Photovoltaikanlage eingesetzt, die beispielsweise auf Freiflächen oder auf Dächern montiert werden können. Daneben sind auch Kleinst-PV-Anlagen bekannt, die üblicherweise nicht zur Einspeisung ins Stromnetz vorgesehen sind, sondern den Eigenbedarf am Installationsort decken sollen. Derartige Anlagen werden oftmals auch als Stecker-Solaranlagen, steckerfertige PV-Anlagen oder auch unabhängig vom tatsächlich gewählten Aufstellungsort als Balkon-Kraftwerke bezeichnet.

Aus dem allgemeinen Stand der Technik sind des Weiteren Warmwassererzeuger bekannt. Diese dienen dazu, Trink- oder Brauchwasser auf eine gewünschte Temperatur zu erwärmen und über einen integrierten Vorratsbehälter eine gewisse Menge Warmwasser bereitzuhalten. Warmwassererzeuger können im Rahmen einer Gebäudeinstallation sowohl zentral für das gesamte Gebäude als auch lokal für einzelne Entnahmestellen installiert werden. Typischerweise werden Warmwassererzeuger elektrisch betrieben, wobei ein aus dem Stromnetz gespeister Heizwiderstand zum Erwärmen des Warmwassers herangezogen wird.

Neben dem Betrieb am Stromnetz werden im Stand der Technik bereits andere Aufbauten vorgeschlagen, bei denen ein Betrieb des Warmwassererzeugers mittels regenerativer Energiequellen erfolgen kann.

Die US 2012/187106 A1 zeigt eine photovoltaische Heizvorrichtung, die auf Schwankungen der Intensität der einfallenden Sonnenstrahlung reagiert, umfassend ein photovoltaisches Zellenfeld, mindestens ein Heizelement und eine MPPT-Schaltung zur Höchstleistungspunkt-Nachführung, die maximale Leistung an das mindestens ein Heizelement liefert. Die Versorgung der Heizvorrichtung kann zwischen der dem Zellenfeld nachgeschalteten MPPT-Schaltung, die eine an das Heizelement angepasste Spannung bereitstellt, und einer Netzversorgung umschaltbar sein.

Die DE 93 02 756 U1 zeigt eine Regeleinrichtung für einen Umsetzer zur Verwendung in einer MPPT-Schaltung für einen Kraftgenerator, der durch erneuerbare Energien betrieben werden kann.

Aus der DE 10 2012 105 609 B3 ist ein Warmwasserbereiter und ein Verfahren zum Betreiben des Warmwasserbereiters bekannt, die eine elektrische Heizeinrichtung aufweisen, die von einer ersten elektrischen Energiequelle und einer zweiten elektrischen Energiequelle mit elektrischer Energie versorgt werden kann. Zur energieeffizienten Versorgung mit geringem Aufwand wird die Heizeinrichtung von der ersten Energiequelle mit Gleichspannung und von der zweiten Energiequelle mit Wechselspannung versorgt.

In der DE 10 2020 102 532 A1 wird eine Schaltungsvorrichtung zur Versorgung eines Warmwassererzeugers aus einer regenerativen Energiequelle, insbesondere aus einer Solarzelle oder aus einem Windrad, beschrieben, bei der Ausgangsanschlüsse der Energiequelle mit einer Anpassungsschaltung verbunden sind, deren Ausgangsstromkreis durch einen Heizwiderstand des Warmwassererzeugers geführt ist, wobei die Anpassungsschaltung über eine Steuerschaltung so angesteuert ist, dass der Stromfluss durch den Heizwiderstand einer vorgegebenen Leistungsabgabe an den Heizwiderstand entspricht und dass alternativ oder zusätzlich ein Betreib des Warmwassererzeugers über eine Netzversorgung durchführbar ist. Die Anpassungsschaltung umfasst einen Gleichspannungswandler mit einer optionalen MPPT-Funktion.

Die DE 10 2014 110 892 A1 beschreibt eine Ausgestaltung einer PhotovoltaikAnlage, bei der eine Leistungsvariation einer Heizeinrichtung vorgenommen werden kann. Dazu kann es vorgesehen sein, eine Heizeinrichtung mit nur einem Heizelement zu verwenden, der eine Pulsweitenmodulationssteuerung (PWM-Steuerung) zur Leistungsvariation vorgeschaltet ist.

In der DE 10 2016 111 343 A1 ist beschrieben, zunächst eine Batterie so weit wie möglich mit Überschussstrom zu versorgen. Sobald die Batterie vollständig geladen ist, wird ein Heizelement entsprechend seinen Leistungsstufen eingeschaltet, um den Überschussstrom weiter zu verwerten.

Die CN 2 17 330 231 U zeigt, dass ein Wechselstrom-Heizrohr und ein Gleichstrom-Heizrohr am Boden eines Wassertanks eines elektrischen Warmwasserbereiters angeordnet sind, sodass die Wechselstromversorgung des kommerziellen Stroms und der photovoltaische Gleichstrom elektrische Heizenergie liefern können. Der Heizmodus des Wassertanks wird entsprechend gesteuert und Energie angemessen zugewiesen. Die Wirkung der Solarenergie kommt voll zum Tragen, da die Wechselstrom-Zusatzheizung nur dann eingeschaltet wird, wenn die Photovoltaik-Erzeugungskapazität den Warmwasserbedarf nicht decken kann.

Ausgehend von diesem Stand der Technik stellt sich nun die Aufgabe, eine Schaltungsvorrichtung zu schaffen, die die Leistungsabgabe einer regenerativen Energiequelle, insbesondere einer Kleinst-PV-Anlage, auf einfache Weise steuert.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvollerweise miteinander kombiniert werden. Die Beschreibung, insbesondere im Zusammenhang mit der Zeichnung, charakterisiert und spezifiziert die Erfindung zusätzlich.

Gemäß der Erfindung wird eine Schaltungsvorrichtung angegeben, die eine Impedanz eines Heizwiderstands eines Wasserboilers als resistive Last anpasst, wobei die resistive Last über einen Schalter parallel zu einem Kondensator und Ausgangsanschlüssen einer regenerativen Energiequelle in Form einer Solarzelle verbunden ist, und eine parallel zu den Ausgangsanschlüssen der regenerativen Energiequelle angeordnete weitere Lastschaltung mit einem Wechselrichter aufweist, der mit einem Stromnetz verbunden ist, wobei die Aufteilung der Leistungsabgabe der regenerativen Energiequelle an die resistive Last und an die weitere Lastschaltung so festgelegt ist, dass die von der weiteren Lastschaltung an das Stromnetz abgegebene Leistung einer Grundlast entspricht.

Ein Grundgedanke der Erfindung besteht darin, eine einfache Aufteilung der von der regenerativen Energiequelle zur Verfügung gestellten Leistung zwischen zwei Verbrauchern vornehmen zu können. Einer der beiden Verbraucher ist dabei ein Wasserboiler, dessen Heizwiderstand eine resistive Last darstellt, wobei die Anpassungsschaltung dessen Impedanz anpassen kann, sodass festgelegt ist, welcher Anteil der von der regenerativen Energiequelle zur Verfügung gestellten Leistung an den Heizwiderstand abgegeben wird. Die restliche der von der regenerativen Energiequelle zur Verfügung gestellten Leistung wird dann an die weitere Lastschaltung geführt, die über einen Wechselrichter mit einem Stromnetz verbunden ist. Auf diese Weise lässt sich die Lastschaltung zusätzlich zum Wasserboiler aus der regenerativen Energiequelle betreiben und über eine entsprechende Programmierung der den Schalter ansteuernden Steuerschaltung konfigurieren. Hierbei erfolgt in der erfindungsgemäßen Schaltungsvorrichtung lediglich die Aufteilung der von der regenerativen Energiequelle zur Verfügung gestellten Leistung, ohne dabei ein schaltungstechnisch aufwendiges MPP-Tracking realisieren zu müssen. Sollte dies benötigt werden, kann es mittels der weiteren Lastschaltung bereitgestellt werden. Mittels des Wechselrichters ist es möglich, beliebige mit Wechselspannung zu betreibende Geräte an die Schaltungsvorrichtung anzuschließen. Typischerweise wird jedoch der Wechselrichter eine Netzspannung abgeben, sodass die Schaltungsvorrichtung bezüglich der weiteren Lastschaltung wie eine Kleinst-PV-Anlage arbeiten kann, die parallel dazu einen Wasserboiler betreibt, sodass überschüssige Leistung im Wasserboiler in Form von vorgeheiztem Wasser gespeichert werden kann. Die Anpassungsschaltung ersetzt dabei die ansonsten üblichen Gleichspannungswandler, welche aufgrund der dort verbauten Induktivitäten jedoch aufwendig sind und einen hohen Platzbedarf aufweisen. Die Aufteilung der Leistungsabgabe der regenerativen Energiequelle an die resistive Last und an die weitere Lastschaltung ist so festgelegt, dass die von der weiteren Lastschaltung an das Stromnetz abgegebene Leistung einer Grundlast entspricht. Das Stromnetz kann zusätzlich mit einem öffentlichen Stromnetz verbunden sein. In vielen Anwendungsfällen, beispielsweise in Privathäusern oder Bürogebäuden, lässt sich die Grundlast festlegen, die durch ständig in Betrieb befindliche elektrische Geräte permanent zur Verfügung gestellt werden muss. Hierzu zählen neben Elektrogeräten im Standby-Modus beispielsweise auch Komponenten der Haustechnik, wie Pumpen oder dergleichen, die permanent in Betrieb sind. Typischerweise beträgt in einem Wohngebäude die Grundlast bis zu einigen 100 W. Die erfindungsgemäße Schaltungsvorrichtung kann nach Ermittlung der Grundlast nun so eingestellt werden, dass über den Wechselrichter dieser Anteil an elektrischer Leistung zur Verfügung gestellt wird. Somit werden nur neu zugeschaltete Verbraucher aus dem öffentlichen Stromnetz versorgt werden.

Gemäß einer Ausführungsform der Erfindung weist die resistive Last mehrere Einzelwiderstände aufweist, die zur Anpassung der Impedanz der resistiven Last individuell zuschaltbar sind.

Die Energiezufuhr in den Heizstab dadurch variabel gehalten werden, dass der Heizstab in Einzelwiderstände aufgeteilt wird, die variabel zugeschaltet werden. Dadurch ergibt sich wiederum eine variable Impedanz des Heizwiderstandes die parallel zum Wechselrichter geschaltet ist.

Gemäß einer weiteren Ausführungsform der Erfindung ist die Anpassungsschaltung über die Steuerschaltung so angesteuert, dass über eine Schaltfrequenz des Schalters die Impedanz der resistiven Last angepasst ist.

Eine variable Energiezufuhr an den Wechselrichter kann dadurch geregelt werden, dass die Energie in den Heizstab durch Pulsweitenmodulation verändert wird. Dadurch ergibt sich eine variable Impedanz des Heizwiderstandes die parallel zum Wechselrichter geschaltet ist.

Gemäß einer weiteren Ausführungsform der Erfindung ermöglicht der Wechselrichter ein MPP-Tracking der regenerativen Energiequelle.

Auf diese Weise wird die Effizienz der erfindungsgemäßen Schaltungsvorrichtung erhöht, da zum Betrieb des Wechselrichters eine Leistungspunktoptimierung vorgenommen wird.

Gemäß einer weiteren Ausführungsform der Erfindung deckt die von der weiteren Lastschaltung an das Stromnetz abgegebene Leistung zusätzlich zur Grundlast einen variablen Verbrauch ab.

Ziel der Regelung ist es, neben dem Grundverbrauch eines Haushalts so viel Energie ins Hausnetz zu liefern, dass der momentane Verbrauch des Haushalts abgedeckt wird. Dazu ist eine Strommessung an der Verbindung von Hausnetz und öffentlichem Netz erforderlich.

Gemäß einer weiteren Ausführungsform der Erfindung kann die von der weiteren Lastschaltung an das Stromnetz abgegebene Leistung aus einem Signal eines Stromzählers abgeleitet sein, das als Eingangsgröße der Steuerschaltung zugeführt ist.

Moderne Stromzähler können die tatsächlich benötigte elektrische Leistung in Form eines Signals abgeben, wobei diese Information der erfindungsgemäßen Schaltungsvorrichtung zugeführt wird, um entweder die oben beschriebene Versorgung der Grundlast zu ermöglichen oder aber Veränderungen in der benötigten elektrischen Leistung entsprechend bei der Aufteilung der von der regenerativen Energiequelle zur Verfügung gestellten Leistung berücksichtigen zu können. Die Einspeiseleistung an die weitere Lastschaltung kann dann auch so eingestellt werden, dass möglichst der gesamte derzeitige Stromverbrauch abgedeckt wird.

Gemäß einer weiteren Ausführungsform der Erfindung ist die von der weiteren Lastschaltung an das Stromnetz abgegebene Leistung so gewählt ist, dass eine Nulleinspeisung erfolgt.

Wie bei Kleinst-PV-Anlagen üblich kann die erfindungsgemäße Schaltungsvorrichtung mit dem öffentlichen Stromnetz verbunden werden, um beispielsweise überschüssige Leistung der regenerativen Energiequelle in das Stromnetz einzuspeisen. Aufgrund der fehlenden finanziellen Kompensation durch den Netzbetreiber sollte ein derartiger Betriebsmodus jedoch nur in Ausnahmefällen gewählt werden. Dazu ist es erforderlich, dass die Schaltungsvorrichtung den Anteil der den jeweiligen Verbrauchern zur Verfügung gestellten Leistung entsprechend einstellt, um eine Nulleinspeisung zu erreichen.

Gemäß einer weiteren Ausführungsform der Erfindung umfasst die weitere Lastschaltung einen von der der regenerativen Energiequelle aufladbaren Ackumulator.

Dabei kann der Akkumulator über einen DC-DC-Wandler mit dem Wechselrichter verbunden sein.

Ein Aufladen des Akkumulators und ein Erwärmen der Temperatur des Wasserboilers kann in abwechselnden Betriebsphasen durchgeführt werden, welche im Bereich mehrerer Minuten liegen können.

Anstelle eines Wechselrichters zum Verbinden mit dem Stromnetz kann die von der regenerativen Energiequelle zur Verfügung gestellten Leistung auch in einem Akkumulator zwischengespeichert werden. Auf diese Weise lassen sich eine Vielzahl von Anwendungsfällen realisieren, bei denen die elektrische Energie erst zu einem späteren Zeitpunkt benötigt wird. Es versteht sich von selbst, dass die Ausführungsform mit dem aufladbaren Akkumulator auch mit der Ausführungsform mit dem Wechselrichter kombiniert werden kann, sodass zusammen mit dem Wasserboiler insgesamt drei Verbraucher von der erfindungsgemäßen Schaltungsvorrichtung bedient werden können.

Gemäß einer weiteren Ausführungsform der Erfindung bewirkt die Anpassungsschaltung eine Laderegelung des Akkumulators.

Das Aufladen des Akkumulators kann dabei dem Batterietyp entsprechend gewählt werden. Unterschiedliche Ladeverfahren sind dem kundigen Fachmann bekannt und können entsprechend dem verwendeten Batterietyp eingesetzt werden.

Wenn die überschüssige Energie in einen Akkumulator geladen wird, kann diese Energiemenge variabel eingestellt werden, indem die Ladung über definierte Ladepulse in unterschiedlichen Betriebsphasen erfolgt. Das Verhältnis dieser Dauer dieser Ladepulse zu den dazwischen liegenden Pausen bestimmt die mittlere Ladeleistung. Zur Vermeidung von elektromagnetischer Störungen kann die Frequenz dieser Pulse im Bereich von vielen Minuten liegen.

Gemäß einer weiteren Ausführungsform der Erfindung ist ein Ladezustand des Akkumulators oder ist eine Batteriespannung des Akkumulators als Eingangsgröße der Steuerschaltung zugeführt.

Bei den meisten Akkumulatoren ist der Ladezustand nicht direkt messbar beziehungsweise nicht bekannt. Hier kann die Batteriespannung als begrenzende Größe verwendet werden.

Gemäß einer weiteren Ausführungsform der Erfindung ist anhand eines Warmwasserverbrauchs eine maximale Temperatur des Wassers im Wasserboilers festgelegt.

Neben den oben erwähnten Eingangsgrößen kann auch die Wassertemperatur im Wasserboiler der Steuerschaltung zugeführt werden, sodass die Aufteilung der von der regenerativen Energiequelle bereitgestellten Leistung auch in Abhängigkeit des Wasserverbrauchs vorgenommen werden kann. Auf diese Weise kann sichergestellt werden, dass genügend Warmwasser im Wasserboiler vorhanden ist, um von den Bewohnern des Gebäudes genutzt zu werden, ohne jedoch eine zu große Wassermenge bereitstellen zu müssen.

Nachfolgend werden einige Ausführungsbeispiele anhand der Zeichnung näher erläutert. Es zeigen:
- Figur 1: eine schematische Ansicht einer erfindungsgemäßen Schaltungsvorrichtung gemäß einer ersten Ausführungsform, und
- Figur 2: eine schematische Ansicht einer erfindungsgemäßen Schaltungsvorrichtung gemäß einer zweiten Ausführungsform.

In den Figuren sind gleiche oder funktional gleich wirkende Bauteile mit den gleichen Bezugszeichen versehen.

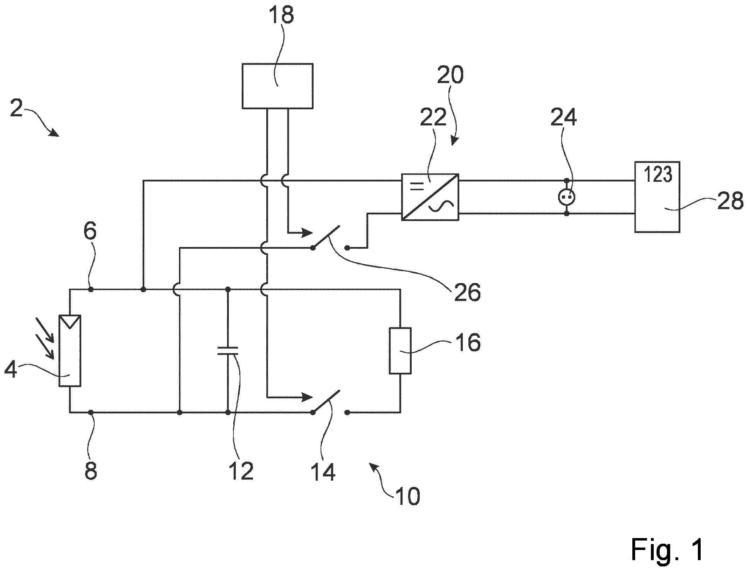

In Figur 1 ist in einer schematischen Ansicht eine erste Ausführungsform einer erfindungsgemäßen Schaltungsvorrichtung 2 gezeigt. Die Schaltungsvorrichtung 2 weist eine regenerative Energiequelle 4 auf, die über Ausgangsanschlüsse 6 und 8 mit einer Anpassungsschaltung 10 verbunden ist. Parallel zur Anpassungsschaltung 10 ist ein Kondensator 12 mit den Ausgangsanschlüssen 6 und 8 verbunden. Zwischen dem Ausgangsanschluss 8 und der Anpassungsschaltung 10 befindet sich ein Schalter 14. Des Weiteren weist die Anpassungsschaltung 10 eine resistive Last 16 auf, die als Heizwiderstand eines Wasserboilers fungiert. Der Schalter 14 wird über eine Steuerschaltung 18 angesteuert.

Parallel zu den Ausgangsanschlüssen 6 und 8 ist eine weitere Lastschaltung 20 angeschlossen. In dem in Figur 1 gezeigten Ausführungsbeispiel umfasst die weitere Lastschaltung 20 einen Wechselrichter 22, der mit einem Stromnetz 24 verbunden ist. Die weitere Lastschaltung 20 ist über einen weiteren Schalter 26 zuschaltbar. Der weitere Schalter 26 wird ebenfalls von der Steuerschaltung 18 gesteuert. Um den Energiebedarf am Stromnetz 24 bestimmen zu können, kann beispielsweise ein Stromzähler 28 vorgesehen sein.

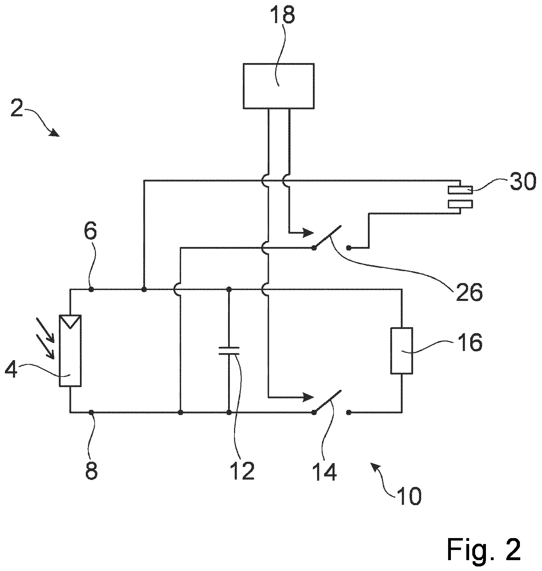

In Figur 2 ist ein weiteres Ausführungsbeispiel der erfindungsgemäßen Schaltungsvorrichtung 2 gezeigt. Dieses Ausführungsbeispiel unterscheidet sich von dem der Figur 1 dadurch, dass die weitere Lastschaltung 20 hier einen Akkumulator 30 umfasst, der anstelle des Wechselrichters 22 und des Stromnetzes 24 sowie gegebenenfalls des Stromzählers 28 vorgesehen ist. Die übrigen Komponenten entsprechen dem des Ausführungsbeispiels gemäß Figur 1, sodass, um Wiederholungen zu vermeiden, auf obige Ausführungen verwiesen wird.

Die Steuerschaltung 18 steuert das Tastverhältnis des Schalters 14 so, dass eine Impedanz der Anpassungsschaltung 10 einen gewünschten Wert annimmt. Auf diese Weise ist es möglich, die Aufteilung der Leistungsabgabe der regenerativen Energiequelle 4 an die resistive Last 16 und an die weitere Lastschaltung 20 festzulegen.

Falls die weitere Lastschaltung 20, wie in Figur 1 gezeigt, den Wechselrichter 22 umfasst, ist es möglich, beliebige mit Wechselspannung zu betreibende Geräte an die Schaltungsvorrichtung 2 anzuschließen. Typischerweise wird jedoch der Wechselrichter 22 eine Netzspannung abgeben, sodass die Schaltungsvorrichtung 2 bezüglich der weiteren Lastschaltung 20 wie eine Kleinst-PV-Anlage am Stromnetz 24 arbeiten kann, die parallel dazu einen Wasserboiler betreibt, sodass überschüssige Leistung im Wasserboiler in Form von vorgeheiztem Wasser gespeichert werden kann. Typischerweise kann der Wechselrichter 22 ein MPP-Tracking der regenerativen Energiequelle 4 ermöglichen.

Wie bei Kleinst-PV-Anlagen üblich kann die erfindungsgemäße Schaltungsvorrichtung 2 mit dem Stromnetz 24 verbunden werden, um beispielsweise überschüssige Leistung der regenerativen Energiequelle in das Stromnetz 24 einzuspeisen, was aufgrund der fehlenden finanziellen Kompensation durch den Netzbetreiber jedoch nicht wirtschaftlich wäre. Vorteilhaft ist es, wenn die von der weiteren Lastschaltung 20 an das Stromnetz 24 abgegebene Leistung einer Grundlast entspricht, die für ständig sich in Betrieb befindlichen elektrischen Geräte permanent zur Verfügung gestellt werden muss. Die erfindungsgemäße Schaltungsvorrichtung 2 kann nach Ermittlung der Grundlast nun so eingestellt werden, dass über den Wechselrichter 22 lediglich dieser Anteil an elektrischer Leistung zur Verfügung gestellt wird. Somit werden nur neu zugeschaltete Verbraucher aus dem öffentlichen Stromnetz versorgt werden. Die von der weiteren Lastschaltung 20 an das Stromnetz 24 abgegebene Leistung kann auch aus dem Stromzähler 28 abgeleitet werden, der ein Signal als Eingangsgröße der Steuerschaltung 18 zuführt. Des Weiteren kann die Einspeiseleistung an die weitere Lastschaltung 20 auch so eingestellt werden, dass möglichst der gesamte derzeitige Stromverbrauch am Stromnetz 24 abgedeckt wird.

Falls die weitere Lastschaltung 20 einen aufladbaren Akkumulator 30 umfasst, wie in Figur 2 gezeigt, kann die von der regenerativen Energiequelle 4 zur Verfügung gestellte Leistung auch zwischengespeichert werden. Auf diese Weise lassen sich eine Vielzahl von Anwendungsfällen realisieren, bei denen die elektrische Leistung erst zu einem späteren Zeitpunkt benötigt wird.

Ebenso ist es möglich, dass die Ausführungsform mit dem aufladbaren Akkumulator 30 gemäß Figur 2 auch mit der Ausführungsform mit dem Wechselrichter 22 kombiniert werden kann, sodass zusammen mit dem Wasserboiler insgesamt drei Verbraucher von der erfindungsgemäßen Schaltungsvorrichtung 2 bedient werden können.

Hier kann die Anpassungsschaltung 10 eine Laderegelung des Akkumulators 30 bewirken, sodass das Aufladen des Akkumulators dem Batterietyp entsprechend gewählt wird und unterschiedliche Ladeverfahren entsprechend dem verwendeten Batterietyp eingesetzt werden können. Dazu kann ein Ladezustand des Akkumulators 30 oder ist eine Batteriespannung des Akkumulators 30 als Eingangsgröße der Steuerschaltung 18 zugeführt werden. Da bei den meisten Akkumulatoren der Ladezustand nicht direkt messbar beziehungsweise nicht bekannt ist, kann die Batteriespannung als begrenzende Größe verwendet werden.

Des Weiteren kann eine Temperatur des Wasserboilers als Eingangsgröße der Steuerschaltung 18 zugeführt werden, sodass die Aufteilung der von der regenerativen Energiequelle 4 bereitgestellten Leistung in Abhängigkeit des Energieinhalts des Wasserboilers vorgenommen werden kann. Dabei führt die Steuerschaltung 18 ein Deaktivieren des weiteren Schalters 26 durch, falls die Temperatur einen vorgegebenen Wert unterschreitet. Auf diese Weise kann sichergestellt werden, dass genügend Warmwasser im Wasserboiler vorhanden ist, um von den Bewohnern des Gebäudes genutzt zu werden.

Erfindungsgemäß wird eine Vorrichtung 2 geschaffen, die durch variable Energieaufnahme der resistiven Last 16 eines Boilers die Energiemenge regelt, die in den Wechselrichter 22 fließt. Ziel der Regelung ist es, zumindest den Grundverbrauch eines Haushalts abzudecken oder zusätzlich so viel Energie ins Hausnetz (Stromnetz 24) zu liefern, dass der momentane Verbrauch des Haushalts abgedeckt werden. Für den letzteren Fall ist eine Strommessung an der Verbindung von Hausnetz 24 und öffentlichem Netz erforderlich.

De variable Energiezufuhr an den Wechselrichter 22 kann dadurch geregelt werden, dass die Energie in den Heizstab als resistive Last 16 durch Pulsweitenmodulation am Schalter 14 verändert wird. Dadurch ergibt sich eine variable Impedanz des Heizwiderstandes als resistive Last 16, die parallel zum Wechselrichter 22 geschaltet ist. Der im Wechselrichter 22 wahlweise enthaltene MPP-Tracker stellt damit die MPP-Spannung ein.

Die Energiezufuhr in den Heizstab als resistive Last 16 kann dadurch variabel gehalten werden, dass der Heizstab in Einzelwiderstände aufgeteilt wird, die variabel zugeschaltet werden. Dadurch ergibt sich wiederum eine variable Impedanz des Heizwiderstandes, die parallel zum Wechselrichter 22 geschaltet ist. Der optional im Wechselrichter enthaltene MPP-Tracker stellt wiederum damit die MPP-Spannung ein.

Die vorgesehene Energie zur Einspeisung kann in zunächst in einem Akkumulator 30 zwischengespeichert werden. Wenn die überschüssige Energie in den Akkumulator 30geladen wird, kann diese Energiemenge variabel eingestellt werden, indem die Ladung über definierte Ladepulse als Betriebsphasen erfolgt. Das Verhältnis dieser Dauer dieser Ladepulse zu den dazwischen liegenden Pausen bestimmt die mittlere Ladeleistung. Zur Vermeidung von elektromagnetischer Störungen kann die Frequenz dieser Pulse im Bereich von vielen Minuten liegen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Liste der Bezugszeichen:

- 2: Schaltungsvorrichtung
- 4: Energiequelle
- 6: Ausgangsanschluss
- 8: Ausgangsanschluss
- 10: Anpassungsschaltung
- 12: Kondensator
- 14: Schalter
- 16: resistive Last
- 18: Steuerschaltung
- 20: weitere Lastschaltung
- 22: Wechselrichter
- 24: Stromnetz
- 26: weiterer Schalter
- 28: Stromzähler
- 30: Akkumulator

## Patentansprüche

1. Schaltungsvorrichtung (2), die eine Anpassungsschaltung (10) aufweist, die eine Impedanz eines Heizwiderstands eines Wasserboilers als resistive Last (16) anpasst, wobei die resistive Last (16) über einen Schalter (14) parallel zu einem Kondensator (12) und Ausgangsanschlüssen (6, 8) einer regenerativen Energiequelle (4) in Form einer Solarzelle verbunden ist, und eine parallel zu den Ausgangsanschlüssen (6, 8) der regenerativen Energiequelle (4) angeordnete weitere Lastschaltung (20) mit einem Wechselrichter (22) aufweist, der mit einem Stromnetz (24) verbunden ist, wobei die Aufteilung der Leistungsabgabe der regenerativen Energiequelle (4) an die resistive Last (16) und an die weitere Lastschaltung (20) so festgelegt ist, dass die von der weiteren Lastschaltung (20) an das Stromnetz (24) abgegebene Leistung einer Grundlast entspricht.

2. Schaltungsvorrichtung nach Anspruch 1, bei der die resistive Last (16) mehrere Einzelwiderstände aufweist, die zur Anpassung der Impedanz der resistiven Last (16) individuell zuschaltbar sind ist.

3. Schaltungsvorrichtung nach Anspruch 1, bei der die Anpassungsschaltung (10) über eine Steuerschaltung (18) so angesteuert ist, dass über eine Schaltfrequenz des Schalters (14) die Impedanz der resistiven Last (16) angepasst ist.

4. Schaltungsvorrichtung nach einem der Ansprüche 1 bis 3, bei der der Wechselrichter (22) ein MPP-Tracking der regenerativen Energiequelle (4) ermöglicht.

5. Schaltungsvorrichtung nach einem der Ansprüche 1 bis 4, bei der die von der weiteren Lastschaltung (20) an das Stromnetz (24) abgegebene Leistung zusätzlich zur Grundlast einen variablen Verbrauch abdeckt.

6. Schaltungsvorrichtung nach einem der Ansprüche 1 bis 5, bei der die von der weiteren Lastschaltung (20) an das Stromnetz (24) abgegebene Leistung aus einem Signal eines Stromzählers (28) abgeleitet ist, das als Eingangsgröße der Steuerschaltung (18) zugeführt ist.

7. Schaltungsvorrichtung nach einem der Ansprüche 1 bis 6, bei der die von der weiteren Lastschaltung (20) an das Stromnetz (24) abgegebene Leistung so gewählt ist, dass eine Nulleinspeisung erfolgt.

8. Schaltungsvorrichtung nach einem der Ansprüche 1 bis 7, bei der die weitere Lastschaltung (20) einen von der der regenerativen Energiequelle (4) aufladbaren Akkumulator (30) umfasst.

9. Schaltungsvorrichtung nach Anspruch 8, bei der der Akkumulator (30) über einen DC-DC-Wandler mit dem Wechselrichter (22) verbunden ist.

10. Schaltungsvorrichtung nach Anspruch 8 oder 9, bei der ein Ladezustand des Akkumulators (30) oder eine Batteriespannung des Akkumulators (30) als Eingangsgröße der Steuerschaltung (18) zugeführt ist.

11. Schaltungsvorrichtung nach einem der Ansprüche 8 bis 10, bei der ein Aufladen des Akkumulators und ein Erwärmen der Temperatur des Wasserboilers in abwechselnden Betriebsphasen durchgeführt wird.

12. Schaltungsvorrichtung nach Anspruch 11, bei der die Betriebsphasen im Bereich mehrerer Minuten liegen.

13. Schaltungsvorrichtung nach einem der Ansprüche 1 bis 12, bei der anhand eines Warmwasserverbrauchs eine maximale Temperatur des Wassers im Wasserboilers festgelegt ist.

14. Schaltungsvorrichtung nach einem der Ansprüche 1 bis 13, bei der das Stromnetz (24) zusätzlich mit einem öffentlichen Stromnetz verbunden ist.
